Europäisches Patentamt

European Patent Office

Office européen des brevets

(11) Publication number: **0 118 887**
**A2**

(12) # EUROPEAN PATENT APPLICATION

(21) Application number: **84102510.9**

(22) Date of filing: **08.03.84**

(51) Int. Cl.³: **B 60 K 5/12**
**F 16 F 15/04, F 16 F 3/10**

(30) Priority: **11.03.83 IT 2002183**

(43) Date of publication of application:
**19.09.84 Bulletin 84/38**

(84) Designated Contracting States:
**DE FR GB**

(71) Applicant: **INDUSTRIE PIRELLI S.p.A.**
**Piazzale Cadorna, 5**
**I-20123 Milan(IT)**

(72) Inventor: **Tangorra, Giorgio**
**Via Ramazzotti, 12**
**Monza (Milan)(IT)**

(74) Representative: **Dr. Elisabeth Jung Dr. Jürgen**
**Schirdewahn Dipl.-Ing. Claus Gernhardt**
**P.O. Box 40 14 68 Clemensstrasse 30**
**D-8000 München 40(DE)**

(54) Supporting device for elastically supporting a mass and for damping vibrations.

(57) A supporting device according to the invention for elastically supporting a mass (8) comprises a box (1), an anchor (5) that is movable in the direction of the vibrations of the mass, a spring (4) that is interposed between the box and the anchor, and an annular shaped damping element (12) fixed to the box itself. The anchor (5) is provided with first abutment walls (20), that are apt for coming into contact with second abutment walls (22) that are formed on a bush (16) that is fixed to said damping element (12), whenever axial movement of said anchor, with respect to said bush, is greater than a predetermined movement.

Fig.1

<u>SUPPORTING DEVICE FOR ELASTICALLY SUPPORTING A MASS AND FOR</u>
<u>DAMPING VIBRATIONS</u>

The present invention refers to a supporting device for elastically suporting a mass with respect to a frame, in particular an engine of a motor car with respect to the chassis, and for damping the vibrations of the mass itself, said device being of the type comprising a box for being fixed to the above-said frame, at least one spring that is connected to said box, and an anchor which is apt for bearing the said mass and which is substantially movable in the direction of the vibrations of the mass itself, and moreover, at least one annular shaped damping element, made of rubber, that is interposed between the anchor and the above-said box.

As is already known, various devices and machines that exist, which are elastically supported with respect to a frame, give origin to vibratory systems whereby the mass is usually subjected to vibrations of a high frequency, but with a small amplitude, whereas vibrations of a low frequeny and a high amplitude are rarely encountered. The vibrations of the first type prove to be more troublesome, because when transmitted to the frame,they give rise to a considerable amount of noise.

In the already known supporting devices, the vibrations of the first type become almost wholly transmitted to the frame with the result of producing, apart from the vibrations themselves, troublesome noises. In fact, in the vibratory systems,wherein such devices are utilized, the connection between mass and frame is had through elastic elements having a high rigidity. Hence, the vibrations of the mass are transmitted almost wholly to the frame itself.

One aim of the present invention is to realize a supporting device of the type described, which does not present the drawbacks mentioned above, and which is hence able to prevent, or to considerably reduce the transmission of any vibrations of a high frequency, from the vibratory mass to the frame, with obviating in this way the emission of irritating noises, and to effectively dampen the vibrations of high amplitude by reducing their amplitude within a short period of time.

According to the invention there is realized a supporting device for elastically supporting a mass with respect to a frame, in particular, an engine of a motor vehicle with respect to the chassis, and for damping the vibrations of said mass, comprising a box suited for being fixed to said frame, characterized by the fact of comprising a spring, that is connected to said box, and an anchor, which is suited for bearing said mass and which is substantially movable in the direction of the vibrations of the mass, and at least one annular shaped damping element interposed between said anchor and said box, said element being fixed in the correspondence of the outermost peripheral part to said box, and in the correspondence of the peripherally innermost part to a bush, and being bounded by a surface which has such a form as to allow the said damping element to roll on the surfaces of said box and of said bush, when it becomes deformed owing to movement of said bush with respect to said box in said direction. Said device preferably is moreover characterized by the fact of comprising first abutment walls provided on said anchor, and second abutment walls provided on said bush, with there being present between said first and second abutment walls a predetermined gap, when the device bears said mass in such a way that said anchor rests only upon said spring. The said abutment walls being apt for coming into contact with one another in such a way that said anchor transmits vibrations to said bush only when the movement of said anchor in said direction, and as produced by the vibrations, exceeds said clearance or gap.

For having a better understanding of the device of the invention, there shall now be given,by way of example,the description of two forms of realization with referring to the attached drawings, whereby:

FIG. 1 represents a supporting device of the invention corresponding to a first form of realization;

FIG. 2 represents a schematic cross section of the supporting unit , corresponding to a second form of realization;

FIGS. 3 to 8 represent various sections of damping elements that can be utilized in the device of the invention;

FIG. 9 represents the elastic characteristics of the device;

FIG.10 represents certain curves that show the damping force as a function of the amplitude of vibration of the mass.

The supporting device of the invention comprises a box 1 having any whatsoever suitable form, for convenience'sake cup-shaped form, provided with attaching means 2 suited for fixing it to a frame 3, at least one spring 4, one of whose ends is fixed to the base side of the box, and an anchor 5 which has, for convenience'sake, the form of a cylindrical shaft, and which is provided with an end head 6 that is connected in any suitable manner to the other end of the spring 4. Said anchor 5 has another end head 7 upon which a mass 8 can rest (for example, the engine of a motor vehicle), that has to be supported by the device of the invention.

The anchor 5 is movable substantially in the direction of the vibrations of the mass 8 that rests upon it; said direction,in the instance of the illustrated example,is vertical.

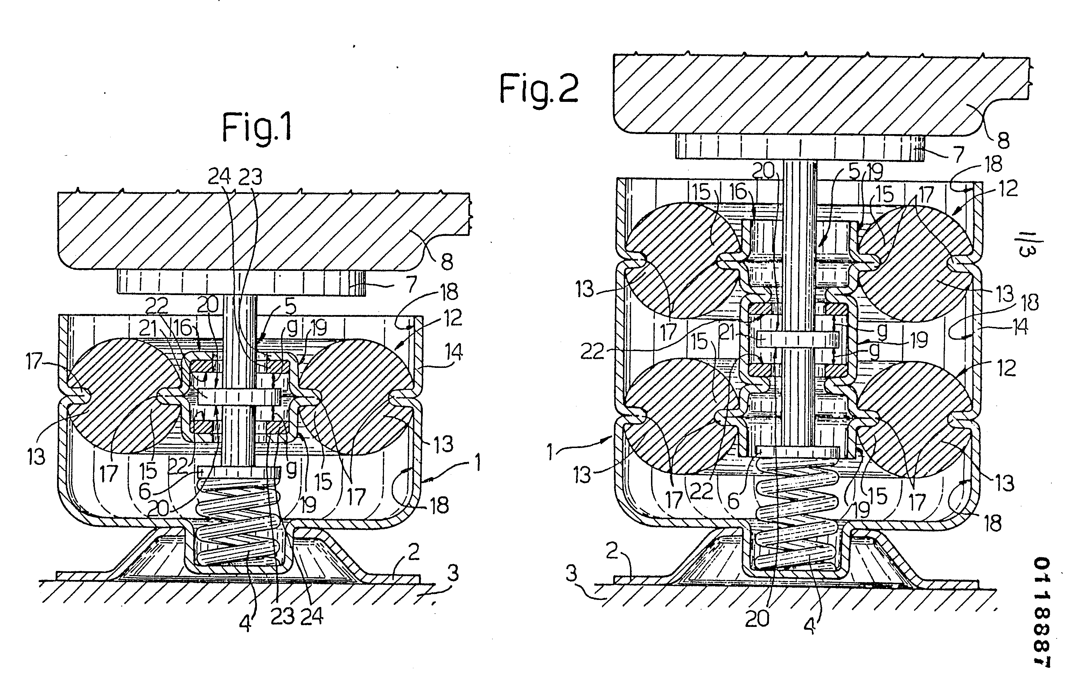

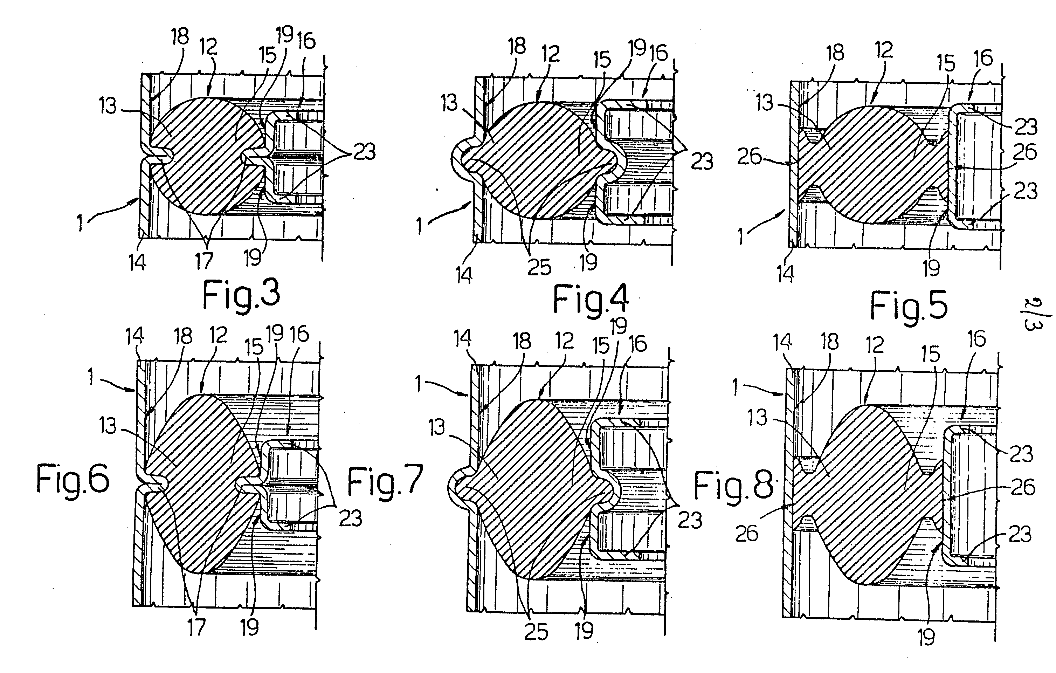

The device comprises moreover a damping element 12 having an annular form and being made of rubber, that, in the form of realization illustrated in FIG. 1, is disposed co-axially to the axis of the anchor 5. Said damping element 12 is fixed in correspondence of one portion of its outermost peripheral part 13 to the lateral wall 14 of the box 1, and in correspondence of its innermost peripheral part 15 to a bush 16. The above-said connection of the damping element 12 with the box 1 and the bush 16 can conveniently be realized in the way indicated schematically in FIG. 1, namely by means of inserting annular edges 17 of the box 1 and the bush 16 into corresponding internal annular grooves formed in the damping element 12. Or else any other convenient means may be used, as, for example, shown in any of the FIGURES 3 to 8, that shall be described later-on.

The form of the cross section of the damping element 12 is chosen in such a manner that by applying opposite axial forces to the box 1 and to the bush 16, respectively, there is produced a deformation of the damping element 12 such as to create a real and proper rolling of the deformed element 12 upon the cylindrical surfaces 18 and 19, respectively, inside the box 1 and outside the bush 16. In order to realize a deformation of this type, it is necessary for the damping element 12, apart from its being connected to the box 1 and to the bush 16 in the manner previously indicated, to be bounded by a substantially curved outer surface. Said forms of the cross section and the connecting conditions, that are particularly suited for obtaining the previously indicated aims, are those indicated in the FIGS. 3 to 8. Conveniently, for the aims that shall be described further on, the damping element 12 is mounted between the box 1 and the bush 16, with a radial preloading of a predetermined compression in such a manner as to originate in the element 12 desired compressive stresses.

On the anchor 5, there are formed first abutment walls 20 realized by an annular ridge 21 that forms the rod-shaped central part of the anchor 5 itself. Second abutment walls 22 are obtained on the bush 16, by means of a pair of annular ridges 23. These are positioned with respect to the previous ridge 21 in such a way that between them there is present a predetermined gap $g$ when the mass 8 rests upon the head 7 of anchor 5.

For convenience, between the annular ridges 23 and 21 there are interposed washers 24 of deformable material, for example,of Teflon.

In the FIGS. 3 to 8, there are represented damping elements 12 having diverse cross sections for which different modalities are foreseen for the purpose of connecting them to the box 1 and to the bush 16. In the solutions of the FIG. 3 to 5 the cross section is substantially circular, whereas in the other solutions it is provided with curved sides. The connection of the element 12 to the box 1 and to the bush 16 is realized by inserting annular edges 17 of these latter into corresponding annular grooves of the element 12 (form of realization of the FIGS. 3 and 6), or by inserting annular ridges 25 formed on the element 12 itself into corresponding annular grooves of the other two parts 1 and 16 (FIGS. 4 and 7). Furthermore, the innermost and outermost peripheral surfaces 26 (FIGS. 5 and 8) could be vulcanized or bonded to the corresponding surfaces of the box 1 and of the bush 16.

In FIG. 2,there is represented a device similar to that of FIG.1, wherein two damping elements 12 are present and connected to a common bush 16, which has a slightly different structure as compared to the one found in the previous form of realization. The other parts of the device have substantially the same form and the same disposition as those already described with reference to FIG. 1.

The operation of the supporting device of the invention takes place in the following manner. In the rest condition, wherein the mass 8 is immobile (static condition), the force of the weight that is supported by the supporting device becomes transmitted to the frame 3 through the elements constituted by the anchor 5, the spring 4 and the box 1. Under this condition, the first abutment walls 20 are not in contact with the second abutment walls 21, but between them there is present the predetermined gap g, that is, for example, in the order of some tenths of millimeters.

It is already known that many apparatuses and machines that are elastically supported with respect to a frame, through the means of elastic supports of traditional type, constitute vibratory systems wherein the mass is usually subjected to vibrations of high frequency but of low amplitude, whereas vibrations of low frequency and high amplitude are found to be more rarely encountered. It is usually the vibrations of the former type that result as being irritating, since if transmitted to the frame they originate loud noises.

When, on the supporting device of the invention, vibrations of the former type, i.e. of high frequency and low amplitude, are transmitted, these induce on the anchor 5 vibrations that have substantially the same frequency and amplitude, which are capable of causing movements of the anchor 5 lesser than the width of the gap g. In this manner, said vibrations become transmitted to the frame 3 only through the spring 4, with no mechanical contact between the anchor 5 and the bush 16. Seeing that the spring 4 has a relatively low rigidity, this considerably limits the transmission of any such vibrations. Under such functioning conditions, no great damping action is required of the device itself, the amplitude of the vibrations being low. Hence, any such damping action can efficaciously be carried out by the spring 4.

**0118887**

Therefore, during the normal exercise conditions of the machine or of the supporting device of the invention, no vibrations having a high frequency are transmitted to the frame 3 (or else, they are transmitted in a very reduced measure), with the consequent advantage of eliminating or even considerably reducing any noises in the vibratory system.

On the other hand, when vibrations of a lower frequency and a higher amplitude are transmitted to the supporting device, a condition which occurs less frequently, the anchor 5 also vibrates with the same amplitude, resulting in taking the abutment walls 20 alternatively against the abutment walls 22 and therefore in forcing the bush 16 to move axially and cyclically with the same frequency.Each of these movements of the bush 16 causes the damping element 12 to be deformed and - owing either to the connecting conditions of said element 12 with the box 1 and with the bush 16 or to the form of the cross section of the element 12 itself - during the deformation each element of volume of the element 12 tends to roll on the surfaces 19 and 18 of the bush 16 and of the box 1,respectively. This type of deformation obviously produces a higher internal friction and therefore a very marked damping action produced by the dispersion or dissipation of the energy generated through the internal friction.

In this manner,vibrations of high amplitude are rapidly dampened. Moreover, under such conditions,owing to the mechanical contact or connection realized between the anchor 5 and the damping element 12, apart from that between the anchor 5 and the spring 4, there is had an overall elastic rigidity that proves to be greater than that of the previous case. For said reason, the screening action against any vibrations, as effectuated by the device,results as being more modest. It does not give rise to any drawbacks seeing that, even if these vibrations are under such conditions transmitted more efficaciously to the frame 3, the vibrations of this latter type are nevertheless less frequent and become rapidly dampened.

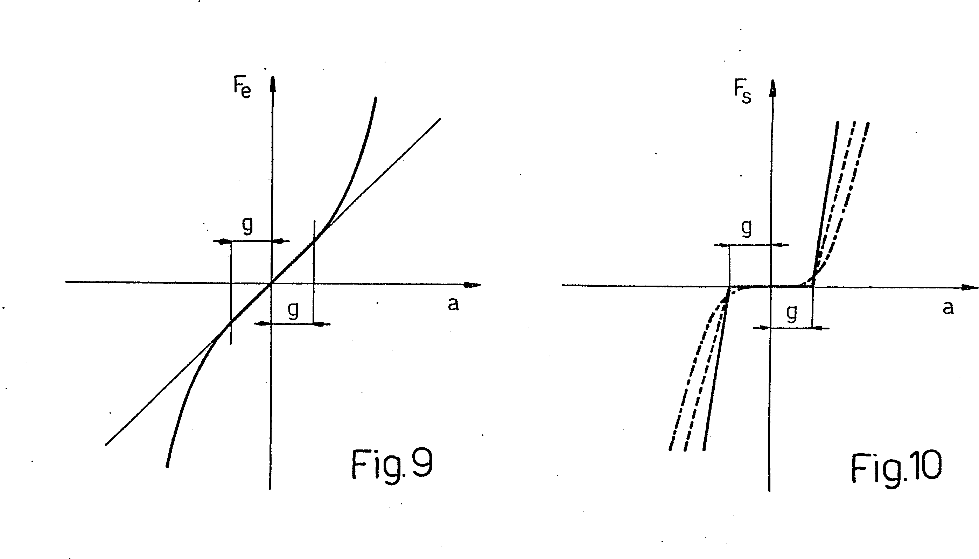

The elastic characteristics of the elastic system realized with the device of the invention are represented in FIG. 9, wherein the amplitudes of vibration $a$ are shown on the abscissa axis, and the elastic forces $F_e$ applied to the anchor 5 are shown on the ordinate axis. As can be observed, when the amplitude of vibration is low and lesser than the width of gap $g$, the characteristic is linear (this is due to the rigidity of the single spring 4). When, on the other hand, this amplitude is greater than gap $g$, the characteristic is no longer linear, and the rigidity (equal to $\frac{d\,F_e}{da}$ ) increases as $a$ increases (due to the intervention of the damping element 12).

In FIG. 10, there is shown a diagram of the dampening force $F_s$ generated by the device as a function of the amplitude of vibration $a$. When the amplitude is lesser than gap $g$, the dampening action is substantially nil (since it is just generated by spring 4). When instead the amplitude is greater than gap $g$, the dampening action increases substantially linearly along with $a$ (see full-line curve). By varying the radial precompression or preloading of the damping element 12, curves are obtained (see broken-line curve) which have a diverse slope. The presence of deformable material washers, like washers 24 (FIG. 1), gives origin to curves having a less marked bend (see dot- and dash-line).

It results as being evident that other modifications and alternative variations can be carried out to the forms of realization described above without exiting from the ambit of the invention itself.

In particular, the spring 4 can be substituted by any whatsoever spring system, including springs of a type that is diverse to what has been illustrated in the forms of realization described hereabove. Such a spring can be substituted, for convenience's sake, by any whatsoever elastomeric body having a low hysterisis value which is hence in a condition to act as a real and proper spring.

CLAIMS:

1.    Supporting device for elastically supporting a mass (8) with respect to a frame (3), in particular an automobile engine with respect to the chassis, and for dampening the vibrations of said mass, comprising a box (1) apt for being fixed to said frame,
c h a r a c t e r i z e d  by the fact of comprising at least one spring (4) that is connected to said box (1) and to an anchor (5) which constitutes a support for said mass (8) and which is movable substantially in the direction of the vibrations of the mass, and at least one annular shaped damping element (12) interposed between said anchor (5) and said box (1), said damping element being fixed in correspondence of its outermost peripheral part to said box, and in correspondence of its inn⁄ermost peripheral part to a bush (16), the damping element being bound by a surface having such a form as to allow said damping element to roll upon respective surfaces (18, 19) of said box and of said bush, when said element (12) is deformed following the movement of said bush with respect to said box in said direction.

2.    Supporting device according to claim 1, characterized by the fact of comprising first abutment walls (20) formed on said anchor (5), and second abutment walls (22) formed on said bush (16), there being present between said first and said second abutment walls  a predetermined gap $g$, when the device supports said mass (8)  in such a manner that said anchor (5) will rest only upon said spring (4), the said abutment walls being apt for coming into contact with one another in such a way that said anchor transmits vibrations to said bush  only when the movement of said anchor in said direction, as produced by the vibrations, is greater than said gap.

3.  Supporting device according to the claims 1 or 2, characterized by the fact that said annular shaped damping element (12) is mounted between said box (1) and said bush (16) with having a radial preloading of compression.

4.  Supporting device according to any one of the previous claims, characterized by the fact that said box (1) is substantially cup-shaped, said spring (4) is a coil spring disposed coaxially to the axis of said box, and that said annular damping element (12) is also coaxial to said axis, with said movable anchor (5) presenting a shaft that is substantilly coaxial to said axis, and at least one annular projection (21) for originating said first abutment walls (20), and the said bush (16) presenting at least one annular projection (23) for originating said second abutment walls (22).

5.  Supporting device according to claim 4, characterized by the fact that between said first and said second abutment walls (20, 22) there is interposed a layer (24) of deformable material.

6.  Supporting device according to anyone of the previous claims, characterized by the fact that said damping element (12) has a substantially circular cross section.

7.  Supporting device according to anyone of the previous claims, characterized by the fact that said damping element (12) has a substantially quadrangular cross section, the sides of said cross section being slightly curved.

8.  Supporting device according to anyone of the previous claims, characterized by the fact that said spring (4) is formed out of an elastomeric body having a low hysteresis value.

0118887

Fig.1

Fig.2

Fig.3

Fig.4

Fig.5

Fig.6

Fig.7

Fig.8

Fig.9

Fig.10